# EUROPEAN PATENT APPLICATION

(11) **EP 3 214 283 A1**
(43) Date of publication of application: **06.09.2017**
(21) Application number: 15853720.9
(22) Date of filing: 19.10.2015
(51) Int. Cl.: F01N 3/20, F01N 3/24, F01N 3/28, F01N 9/00

(54) **DEVICE AND METHOD FOR ADJUSTING AND CONTROLLING ACTUAL AMOUNT OF SUPPLY OF UREA ENTERING AN EXHAUST SYSTEM**

(30) Priority: 27.10.2014 CN 201410582329
(71) Applicant: Jin, Youchun, Suzhou, Jiangsu 215000 (CN)
(72) Inventor: Jin, Youchun, Suzhou, Jiangsu 215000 (CN)
(74) Representative: Atkinson, Jennifer
(86) International application number: PCT/CN2015/092169
(87) International publication number: WO 2016/066029

(57) **Abstract**

A device for adjusting and controlling the actual supplied amount of urea entering an exhaust system comprises an electronic control unit (1), a compressed air supply device (2), a urea storage device (3), a compressed air control device (4), a metering pump or a metering valve (5), a spray nozzle (6), a main pipeline (7), a urea pipeline (8), and a urea control device (9). The urea control device (9) is in communication with the electronic control unit (1) and controls the actual supplied amount of urea injected into the exhaust system from the spray nozzle according to the starting time point and the finishing time point. A method for adjusting and controlling the actual supplied amount of urea entering an exhaust system is also disclosed. The present device and method effectively prevent the excessive urea from being injected into the exhaust system, and enable the original exhaust system to match with stricter emission standards through a low cost improvement.

## Description

### Field of Technology

The present invention relates to the control system for internal combustion engine, especially a device for adjusting and controlling the actual supplied amount of urea entering an exhaust system and the adjusting and controlling method thereof.

### Background of Art

Internal combustion engines may be categorized into two types, namely gasoline engines and diesel engines, which are characterized with their respective advantages due to the different work mechanisms. The gasoline engines are lighter with less vibration and enhanced smoothness while the diesel engines work more efficiently with a 30% cut-down in the fuel consumption and a high torque enabling higher performance at a lower RPM and high power. Generally, the diesel engines have been expected for great prospects for a great many of benefits despite of some evident defects. The emission pollution of internal combustion engines includes carbon monoxides(CO), hydrocarbons(HC), nitrogen oxides(NOx) and particulate matters(PM). The emission pollution of gasoline engines are mainly CO and HC that ternary catalysts have been turned to be a solution. The emission pollution of diesel engines are mainly NOx and PM. The pollution caused by NOx, a hard problem for a long time, has been found a bit easier to deal with in recently years by means of Exhaust Gas Recirculation(EGR) and Selective Catalytic Reduction(SCR).

NOx and PM are found to be on the opposite side of the pollution problem. The NOx pollution mainly derives from the heat generated from the high combustion temperature, that leads to the oxidation of Nitrogen. In order to reduce the generation of PM, the temperature is further heated after full burning of diesel leading to the increased NOx pollution, and vice versa. During EGR a proportion of the exhaust gas is allowed to return into the intake air inlet. The proportion of oxygen comprised in the intake air is decreased, accompanied by the reduced generation of NOx but increased PM. The application of EGR will also cause higher fuel consumption and thus higher cost. It can be seen that although EGR is advantaged in that no additional substance is involved in its process but the effect is rather limited. During SCR NOx reacts with ammonia to produce nitrogen and water, the process of which requires the aid of a catalyst. Ammonia is known for difficult storage and handling due to its instability and toxic. To deal with this problem, the urea solution is sprayed into the upstream of the SCR catalyst. The hydrolysis of urea will take place at the high combustion temperature producing a mixture of ammonia, carbon dioxide and water. The released ammonia then enters the catalyst chamber to react with NOx and get rid of the pollution. The SCR technology is expected with greater prospects for its higher efficiency in NOx conversion, except that the additional provision of urea solution leaves room for improvement. DPFs refer to diesel particulate filters, which tend to clog up due to the absorption of particulates to an amount. The regeneration is achieved through removing the absorbed carbon particulates by burning at a high temperature. However, in China, currently the high content of sulfur in diesel has caused the regeneration of the particulates of sulfur compounds unable to achieve. The DPF has to be replaced anew at a cost. This reality is one of the reasons for tightening the emission standards in China. DOCs refer to Diesel Oxidation Catalysts that play an active role in the process of converting carbon particulates into carbon dioxide.

The modern after-treatment system integrates multiple systems, whereas SCR constitutes the core of the after-treatment system for diesel engines. The emission standards for diesel engines include the European standards and the U.S. standards. In China, the European standards have been referred to for reference. Currently the national emission standards III, which follow the European standards III, are in general practice in China and are believed to be soon substituted with the national emission standards IV, where in some major cities of China national emission standards V have been put into effect. The majority of European are practicing standards V with a number of major cities practicing standards VI, which is planned for a full launch in 2014. The European standards III are considered rather out-of-date, which may be achieved by EGR technology. SCR technology would be necessary to meet with the European standards IV. Compared with European standards IV, the European standards V have been tightened for the emission of NOx while no changes have been made to the PM emission. The PM emission is significantly reduced by half and NOx to one-fifth of the previous standards in the European standards VI.

The SCR technology is rather complex. In theory, to improve the conversion rate of exhaust gas can be realized through the utilization of either an increased amount or massive of catalyst or increased amount of urea. However, it is not that simple in practical. Firstly, the increasing of catalyst to use means even higher cost and also greater volume, both of which will become unacceptable. Secondly, the emission of ammonia due to the extra urea, called ammonia leaks, involves pollution itself with its toxicity and strong smell. It is stated in the emission standards that the average ammonia leak should be kept down below 10ppm with the maximum value no more than 25ppm. Therefore, the key point underlying the SCR technology is focused on injection of proper amount of urea at the proper timing so as to reach a higher conversion rate while managing the ammonia leaks within limits, in other words, the urea injection strategy. Nonetheless, the actual supplied amount of urea is influenced by a number of factors, such as the amount of urea piped from the urea chamber being hard to control to be completely equivalent to that injected into the exhaust system, and that even the most optimized injection strategy has only been able to live up to the average value standard yet without success for the maximum restriction. In the prior arts, targeting at the fulfillment of NOx emission standard as well as ammonia leaks, such means as an increased mass of SCR catalyst, first lowering NOx by EGR technology combined with SCR, or other alternative methods have been used in an attempt, still no high hopes for the practice or popularization of either of which due to the high cost and failure in complying with the European standards VI.

The present invention provides a device for adjusting and controlling the actual supplied amount of urea entering an exhaust system and the adjusting and controlling method thereof, giving a more precise method in urea injection that will prevent the over injection of urea and further lower the cost of SCR process.

### Summary of the Invention

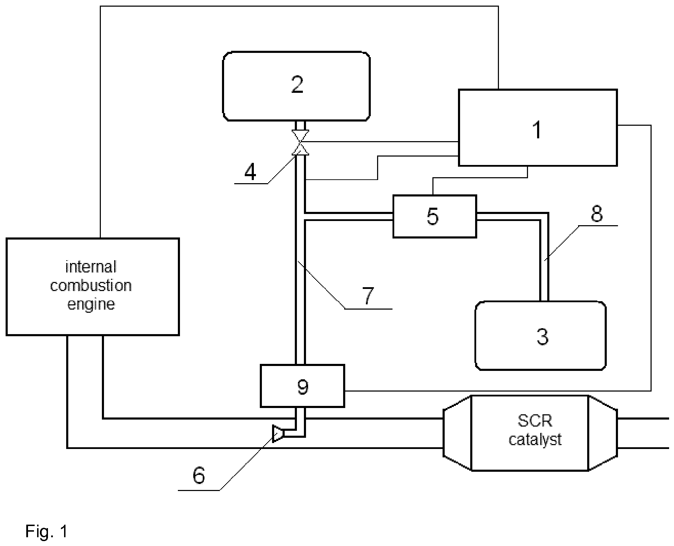

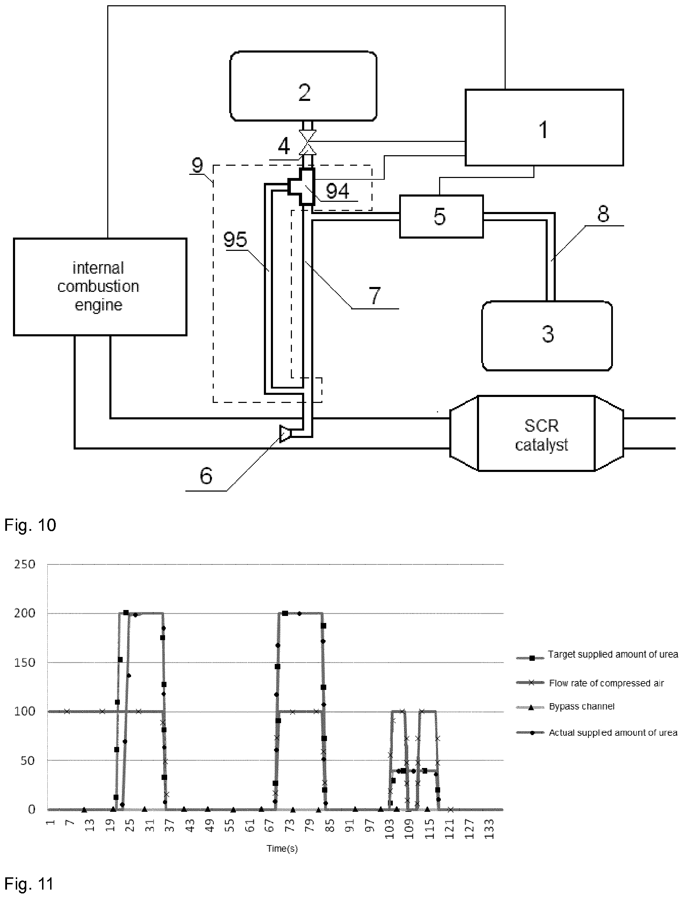

Provided in the present invention is a device for adjusting and controlling the actual supplied amount of urea entering an exhaust system, which comprises an electronic control unit, a compressed air supply device, a urea storage device, a compressed air control device, a metering pump or a metering valve, a spray nozzle, a main pipeline and a urea pipeline; the said electronic control unit is connected with the internal combustion engine of the exhaust system, used for the collection of the performance parameters of the internal combustion engine and calculation of the target supplied amount of urea in the exhaust system and further the determination of the starting time point and finishing time point; the said urea storage device is provided for storing the urea; the said compressed air supply device is connected to the main pipeline; the said compressed air control device is installed at the connection point between the compressed air supply device and the main pipeline, and communicates with the electronic control unit to control the flow rate of the compressed air into the main pipeline; a through hole is formed in the middle section of the main pipeline; the said urea storage device is connected to the through hole by the urea pipeline; the said metering pump or the metering valve, installed to the urea pipeline, communicates with the electronic control unit, which controls the volume of the urea provided by the urea storage device into the main pipeline; the outlet of the main pipeline extends into the exhaust system; the said spray nozzle is installed at the said outlet of the main pipeline so that the urea is introduced into the exhaust system through spraying; the urea mixes with the compressed air in the main pipeline. With references to Fig. 1 and Fig. 10, the present device further comprises an urea control device, which is installed to the main pipeline, and communicates with the electronic control unit; the said urea control device is controlled in such a way so that the compressed air is provided into the main pipeline when the urea is controlled to enter the exhaust system, causing the urea in the main pipeline to be given into the spray nozzle by the compressed air and further enter the exhaust system in the spay-like form; when the urea is controlled to be held from entering the exhaust system, the compressed air is provided into the spray nozzle without passing through the main pipeline, causing the urea in the main pipeline to be held from entering the spray nozzle and from entering the exhaust system.

Provided in the present invention the device for adjusting and controlling the actual supplied amount of urea entering an exhaust system, by referring to Fig. 10, the said urea control device further comprises a three-way valve and an branch airway; the said three-way valve is installed to the section of the main pipeline between the compressed air control device and the through hole; the inlet of the three-way valve is connected to the compressed air control device while the first outlet is connected to the main pipeline and the second outlet is connected to the said branch airway; the other end of the branch airway is connected to the main pipeline with the connecting point located between the through hole and the spray nozzle; the three-way valve communicates with the electronic control unit; when the urea is controlled to enter the exhaust system, the three-way valve connects the compressed air supply device to the main pipeline, allowing the compressed air to enter the main pipeline; when the urea is controlled to be held from entering the exhaust system, the three-way valve connects the compressed air supply device to the branch airway, allowing the compressed air to enter the spray nozzle by the branch airway.

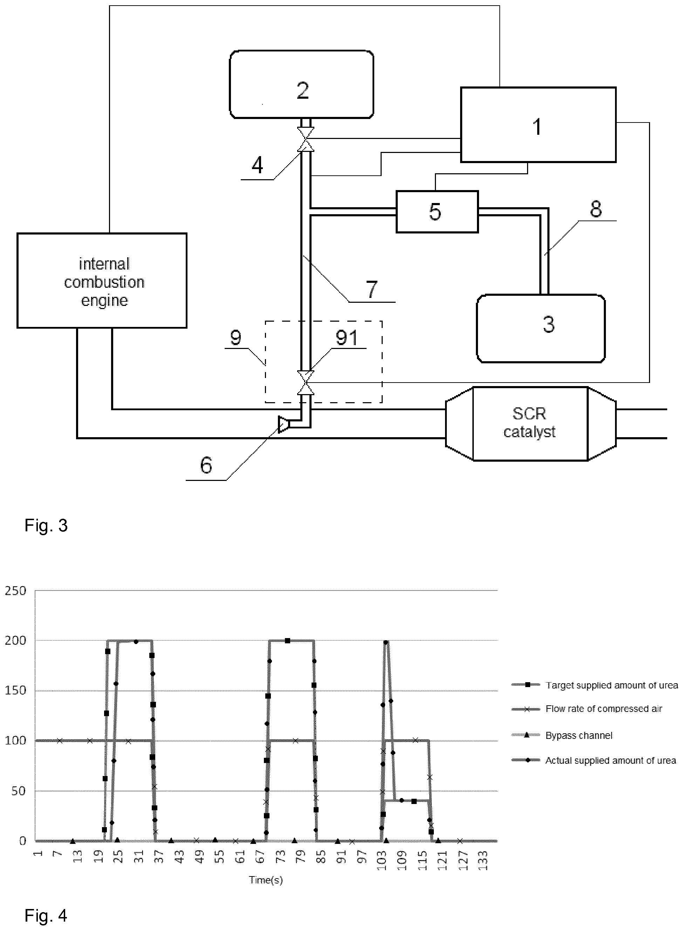

Provided in the present invention the device for adjusting and controlling the actual supplied amount of urea entering an exhaust system, by referring to Fig. 3, Fig. 5 and Fig. 6, the said urea control device is controlled in such a way so that when the urea is controlled to be held from entering the exhaust system, the compressed air is prevented from entering the spray nozzle, thereby preventing the urea from entering the spray nozzle and further into the exhaust system.

Provided in the present invention the device for adjusting and controlling the actual supplied amount of urea entering an exhaust system, by referring to Fig. 3, the said urea control device further comprises a control valve ; the said control valve is installed to the main pipeline between the urea pipeline and the spray nozzle; the control valve communicates with the electronic control unit, which switches on and off the connection between the main pipeline 7 and the spray nozzle by shifting the control valve between an open position and a close position.

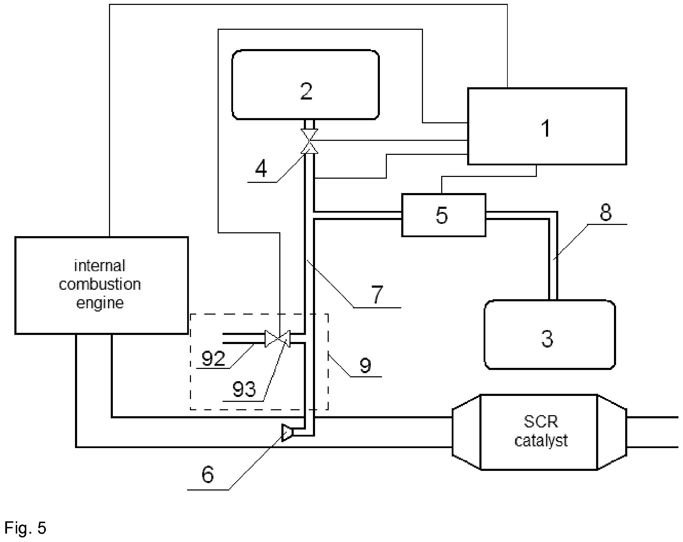

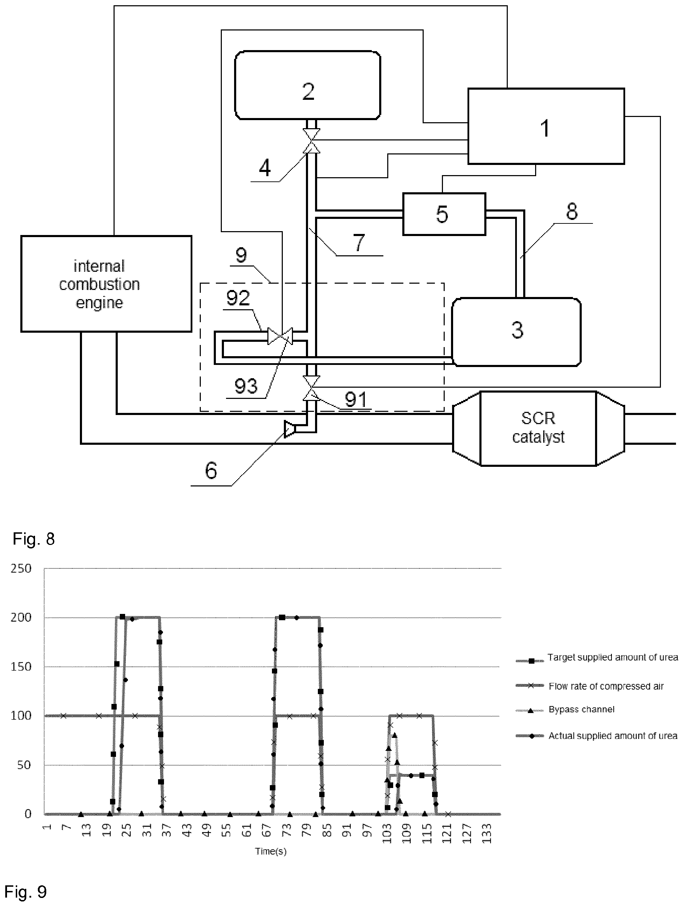

Provided in the present invention the device for adjusting and controlling the actual supplied amount of urea entering an exhaust system, by referring to Fig. 5 and Fig. 8, the said urea control device further comprises a bypass channel and a bypass control valve; the said bypass channel is connected to the main pipeline with the connecting point located between the urea pipeline and the spray nozzle; the said bypass control valve is installed to the bypass channel and communicates with the electronic control unit, the electronic control unit shifts the bypass control valve to an open position for allowing the compressed air to enter the external atmosphere through the bypass channel and shifts the bypass control valve to a close position for allowing the compressed air to enter the spray nozzle.

Provided in the present invention the device for adjusting and controlling the actual supplied amount of urea entering an exhaust system, by referring to Fig. 8, the connecting point of one end of the bypass channel with the main pipeline is located at upstream of the control valve; by switching the control valve to the close position and the bypass control valve to the open position, the compressed air is allowed to enter the bypass channel; whereas by switching the control valve to the open position and the bypass control valve to the close position, the compressed air is allowed to enter the spray nozzle.

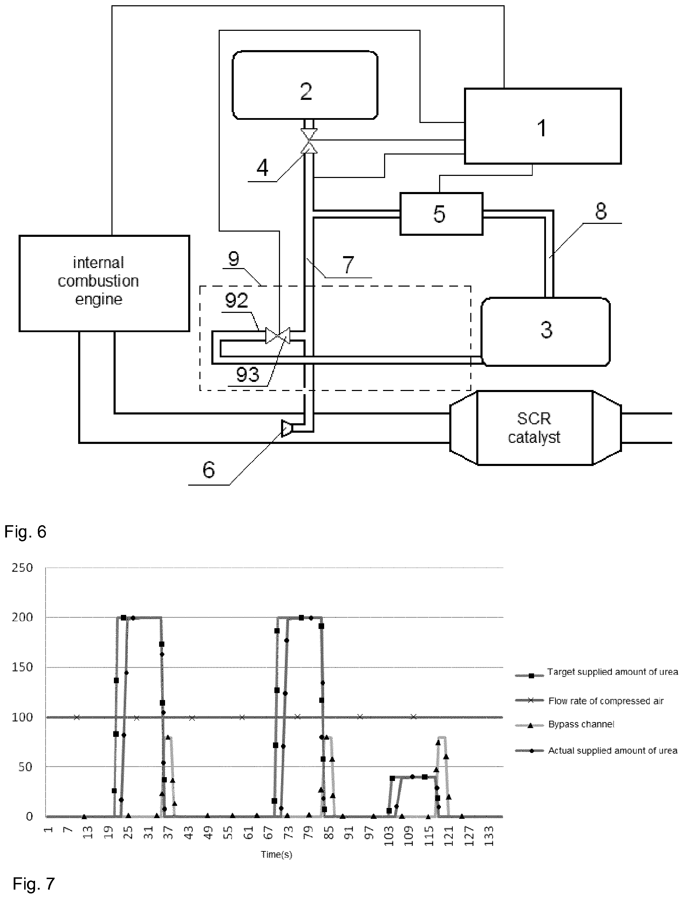

Provided in the present invention the device for adjusting and controlling the actual supplied amount of urea entering an exhaust system, by referring to Fig. 6 and Fig. 8, the other end of the bypass channel is further connected to the urea storage device; by switching the bypass control valve to the open position, the compressed air is allowed to enter the urea storage device through the bypass channel.

Also provided in the present invention is a method provided for adjusting and controlling the actual supplied amount of urea entering an exhaust system, wherein the said method comprises:
Step 1: collecting the performance parameters of the exhaust system and the internal combustion engine, and making calculation of the target supplied amount of urea in the exhaust system and further the determination of the starting and finishing time points;
Step 2: the compressed air supply device providing the compressed air into the main pipeline, while the urea storage device providing the aqueous urea into the main pipeline through the urea pipeline, so that the urea and the compressed air mix in the main pipeline; both the provided volume of the urea and the flow rate of the compressed air are determined according to the target supplied amount of urea;
Step 3: with references to the devices as depicted in Fig. 1 and Fig. 10, when the urea is allowed to enter the exhaust system, the compressed air is provided into the main pipeline by referring to the starting time point, so that the urea in the main pipeline is fed into the spray nozzle by the compressed air and further provided into the exhaust system in the spray-like form; when the urea is controlled to be held from entering the exhaust system, the compressed air is provided into the spray nozzle by referring to the finishing time point without passing through the main pipeline, so that the urea in the main pipeline is held from being fed into the spray nozzle and further into the exhaust system.

Provided in the present invention the method for adjusting and controlling the actual supplied amount of urea entering an exhaust system, by referring to the device of Fig. 10, the said Step 3 further comprises: when the urea enters the exhaust system, the three-way valve connects to the compressed air supply device to the main pipeline, allowing the compressed air to enter the main pipeline; when the urea is controlled to be held from entering the exhaust system, the three-way valve connects the compressed air supply device to the branch airway, allowing the compressed air to enter the spray nozzle through the branch airway 95.

Provided in the present invention the method for adjusting and controlling the actual supplied amount of urea entering an exhaust system, by referring to the device of Fig. 10, when the target supplied amount of urea is below the pre-set threshold, the three-way valve is controlled to connect to the main pipeline intermittently so that the compressed air is provided into the main pipeline intermittently, causing the remaining urea in the main pipeline to enter the spray nozzle.

Provided in the present invention the method for adjusting and controlling the actual supplied amount of urea entering an exhaust system, by referring to the device of Fig. 3, Fig. 5, Fig. 6 and Fig. 8, the said Step 3 is replaced by following: when the urea is allowed to enter the exhaust system, the compressed air is provided into the main pipeline by referring to the starting time point, so that the urea in the main pipeline is fed into the spray nozzle by the compressed air and further provided into the exhaust system in the spray-like form; when the urea is controlled to be held from injecting into the exhaust system, the compressed air is prevented from entering the spray nozzle, so that the urea is held from being fed into the spray nozzle and further into the exhaust system.

Provided in the present invention the method for adjusting and controlling the actual supplied amount of urea entering an exhaust system, by referring to the device of Fig. 3, the said Step 3 comprises installing the control valve to the main pipeline; the control valve is shifted between an open position and a close position to switch on and off the connection between the main pipeline and the spray nozzle.

Provided in the present invention the method for adjusting and controlling the actual supplied amount of urea entering an exhaust system, by referring to the device of Fig. 5, Fig. 6 and Fig. 8, the said Step 3 comprises installing a bypass channel and a bypass control valve outside the pipeline; when the bypass control valve is shifted to the open position, the compressed air is allowed to enter the external atmosphere through the bypass channel, whereas when the bypass control valve is shifted to the close position, the compressed air is allowed to enter the spray nozzle.

Provided in the present invention the method for adjusting and controlling the actual supplied amount of urea entering an exhaust system, by referring to the device of Fig. 6, the said Step 3 further comprises that the connecting point of the bypass channel with the main pipeline is located upstream of the control valve; by switching the control valve to the close position and the bypass control valve to the open position, the compressed air is allowed to enter the bypass channel; whereas by switching the control valve to the open position and the bypass control valve to the close position, the compressed air is allowed to enter the spray nozzle.

Provided in the present invention the method for adjusting and controlling the actual supplied amount of urea entering an exhaust system, by referring to the device of Fig. 6 and Fig. 8, the said Step 3 further comprises that the other end of the bypass channel is further connected to the urea storage device; by switching the bypass control valve to the open position, the compressed air is allowed to be fed into the urea storage device through the bypass channel.

The present invention put forward a solution which is effective in controlling the maximum amount of ammonia leak, giving an actual supplied amount of urea closer to the target supplied amount and makes full use of the SCR catalyst. The existing urea supply system is revised in the present invention, in which the ammonia leak is reduced at low cost while managing to fulfill even stricter emission standards.

### Descriptions of Drawings

Fig. 1 shows the structure of the present device for adjusting and controlling the actual supplied amount of urea entering an exhaust system.
Fig. 2A shows the flowchart of the method for adjusting and controlling the actual supplied amount of urea of the devices depicted in Fig. 1 and Fig. 10; Fig. 2B shows the flowchart of the method for adjusting and controlling the actual supplied amount of urea of the devices depicted in Fig. 5, Fig. 6 and Fig. 8.
Fig. 3 shows the structure of the device for adjusting and controlling the actual supplied amount of urea entering an exhaust system in Example 1.
Fig. 4 shows the graph of square waves representing the controlled actual supplied amount of urea in Example 1.
Fig. 5 shows the structure of the device for adjusting and controlling the actual supplied amount of urea entering an exhaust system in Example 2.
Fig. 6 shows a preferred structure of the device for adjusting and controlling the actual supplied amount of urea entering an exhaust system in Example 2.
Fig. 7 shows the graph of square waves representing the controlled actual supplied amount of urea in Example 2.
Fig. 8 shows the structure of the device for adjusting and controlling the actual supplied amount of urea entering an exhaust system in Example 3.
Fig. 9 shows the graph of square waves representing the controlled actual supplied amount of urea in Example 3.
Fig. 10 shows the structure of the device for adjusting and controlling the actual supplied amount of urea entering an exhaust system in Example 4.
Fig. 11 shows the graph of square waves representing the controlled actual supplied amount of urea in Example 4.
Fig. 12 shows an alternative structure of the device for adjusting and controlling the actual supplied amount of urea entering an exhaust system in Example 4.
Fig. 13 shows the graph of square waves representing the actual supplied amount of urea entering the exhaust system in the prior art.
Fig. 14 shows yet another alternative structure of the device for adjusting and controlling the actual supplied amount of urea entering an exhaust system in Example 4.
Fig. 15 shows yet another alternative structure of the device for adjusting and controlling the actual supplied amount of urea entering an exhaust system in Example 4.

### Embodiments of the Invention

The present invention is further described in details with reference to the following embodiments and drawings. References can be made to the general knowledge and common knowledge of the art for the determination of the processes, conditions and methods involved in the implementation of the present invention. Unless otherwise specified, the scope of the present invention is not intended to be limited to the disclosed embodiments.

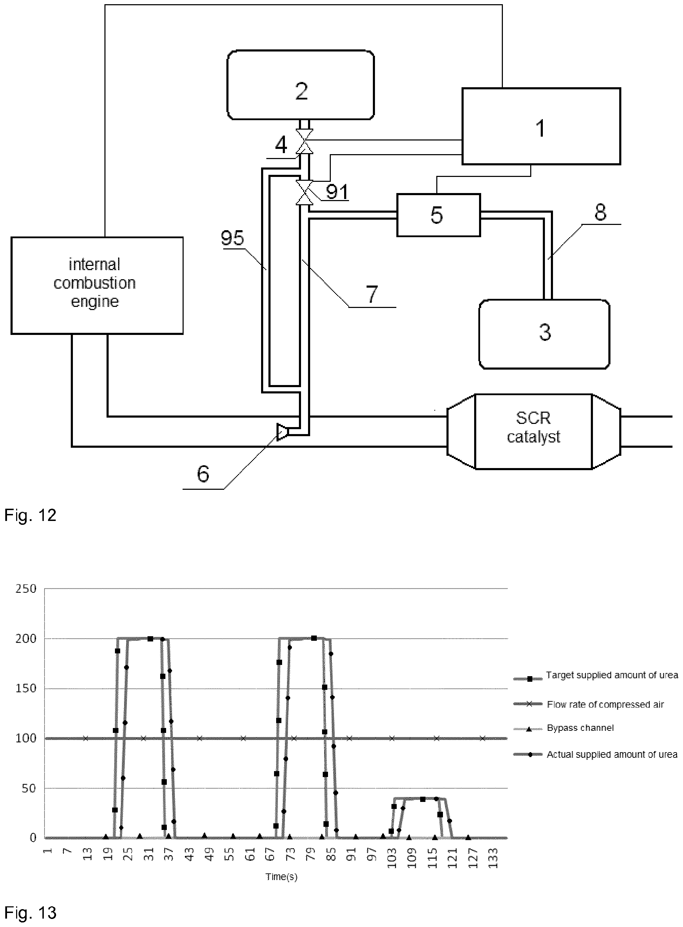

Numerous factors including the delay in data collection and data calculation, the distance from urea tank to exhaust system and the flow rate of the compressed air have brought out inevitable time lag between the time point at which the aqueous urea is injected to the main pipeline and the time point at which the urea enters exhaust system. As is shown in Fig. 13, such time lag leads to both inadequate actual supplied amount of urea at the starting time point as compared with the target amount and excess of actual supplied urea at the finishing time point. The former has become a restricting factor for the efficiency of pollution reduction while the latter leads to the failure in complying with the emission standards due to over-dose urea. Focusing on the adjustment and control of the actual supplied amount of urea entering an exhaust system, the present invention introduces a urea control device which controls the actual amount of urea injected into the spray nozzle and that into the exhaust system prior to the urea entering the exhaust system, which tackles the issue of over-dosing of the supplied urea.

Fig. 1 indicates the structure of the present device for adjusting and controlling the actual supplied amount of urea entering an exhaust system, which comprises an electronic control unit 1, a compressed air supply device 2, a urea storage device 3, a compressed air control device 4, a metering pump or a metering valve 5, a spray nozzle 6, a main pipeline 7, a urea pipeline 8 and a urea control device 9. The electronic control unit 1 is connected with the internal combustion engine of the exhaust system, used for the collection of the performance parameters of the internal combustion engine and calculation of the target supplied amount of urea in the exhaust system and further the determination of the starting and finishing points. The compressed air control device 4 is installed at the connection point between the compressed air supply device 2 and the main pipeline 7, and communicates with the electronic control unit 1 to control the flow rate of the compressed air into the main pipeline 7. A through hole is formed in the middle section of the main pipeline 7. The urea storage device 3 is connected to the through hole by the urea pipeline 8. The metering pump or the metering valve 5, installed to the urea pipeline 8, communicates with the electronic control unit 1, which controls the volume of the aqueous urea provided by the urea storage device 3 into the main pipeline 7 according to the target supplied amount of urea. The aqueous urea mixes with the compressed air in the main pipeline 7, the outlet of which extends into the exhaust system. The spray nozzle 6 is installed at the outlet of the main pipeline 7 so that the urea is introduced into the exhaust system through spraying. The urea control device 9, installed to the main pipeline 7, communicates with the electronic control unit 1, which controls the actual supplied amount of urea entering the exhaust system through the spray nozzle 6 within the period of time set out by the starting and finishing time points.

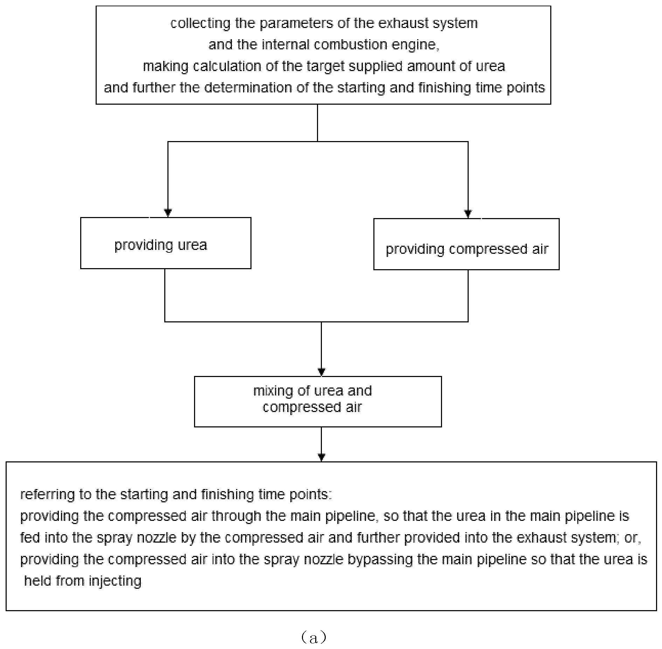

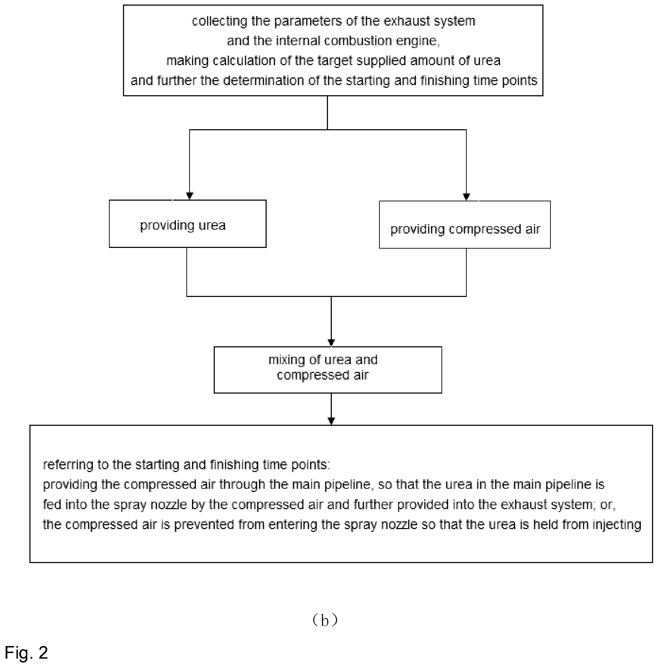

Fig. 2A represents the flow chart of the method provided in the present invention for adjusting and controlling the actual supplied amount of urea entering an exhaust system based on the described device, which comprises:
Step 1: the electronic control unit 1 collects the performance parameters of the exhaust system and the internal combustion engine, makes calculation of the target supplied amount of urea in the exhaust system and further the determination of the starting and finishing time points;
Step 2: the compressed air supply device 2 provides the compressed air into the main pipeline 7, while the urea storage device 3 provides the aqueous urea into the main pipeline 7 through the urea pipeline 8, so that the urea and the compressed air are mixed in the main pipeline 7; the volume of the urea is controlled by the metering pump or the metering valve 5 installed to the urea pipeline 8, while the flow rate of the compressed air is controlled by the compressed air control device 4 installed to the main pipeline 7; both the compressed air control device 4 and the metering pump or the metering valve 5 communicate with the electronic control unit 1 which sends out controlling instructions according to the target supplied amount of urea;
Step 3: when the urea is allowed to enter the exhaust system, the compressed air is provided into the main pipeline 7 by referring to the starting time point, so that the urea in the main pipeline 7 is fed into the spray nozzle 6 by the compressed air and further provided into the exhaust system in the spray-like form; when the urea is controlled to be held from entering into the exhaust system, the compressed air is provided into the spray nozzle 6 by referring to the finishing time point without passing through the main pipeline 7, so that the urea in the main pipeline 7 is held from being fed into the spray nozzle 6 and further into the exhaust system; or alternatively as indicated by Fig. 2B,
when the urea is allowed to enter the exhaust system, the compressed air is provided into the main pipeline 7 by referring to the starting time point, so that the urea in the main pipeline 7 is fed into the spray nozzle 6 by the compressed air and further provided into the exhaust system in the spray-like form; when the urea is controlled to be held from entering the exhaust system, the compressed air is alternatively prevented from flowing into the spray nozzle 6 by referring to the finishing time point, so that the urea is held from being fed into the spray nozzle 6 and further into the exhaust system.

The structure of the present device and the mechanism and function will be discussed in further details below in combination with a plural of exemplary embodiments.

### Example 1

As shown in Fig. 3 is the structure of the present device for adjusting and controlling the actual supplied amount of urea entering an exhaust system. The urea control device 9 further comprises a control valve 91. The control valve 91 is installed to the main pipeline 7, more specifically, for example installed to the section between the urea pipeline 8 and the spray nozzle 6. The control valve 91 is controlled by the electronic control unit 1, which switches on and off the connection between the main pipeline 7 and the spray nozzle 6 by shifting the control valve 91 between an open position and a close position. With the connection switched on, the compressed air and the urea mix together to flow through the spray nozzle 6 and into the exhaust system; while with the connection switched off, the compressed air and the urea still mix in the main pipeline 7 but can find no way into the spray nozzle 6 under, which prevents the excess of urea fed into the exhaust system.

The flowchart of the present device is explained in further details with reference to Fig. 4. The electronic control unit 1 collects the performance parameters of the exhaust system and the internal combustion engine, makes calculation of the target supplied amount of urea in the exhaust system and further the determination of the starting time point and the finishing time point.

As illustrated by the first square wave in Fig. 4, the metering pump or the metering valve 5 allows the aqueous urea into the main pipeline 7 at the starting time point, the mixture of urea and compressed air is provided into the spray nozzle 6 and further into the exhaust system; certain lag out is bound to arise between the actual time point at which the urea enters the exhaust system and the starting time point, due to the time required for the movement of urea and the process for mixing; the control valve 91 is shifted to the close position at the finishing time point under the control of the electronic control unit 1, causing the connection of the main pipeline 7 with the spray nozzle 6 to switch off, rendering the flow rate of the compressed air at the spray nozzle 6 to nil; under such circumstance, the urea is prevented from entering the spray nozzle 6 together with the compressed air, thus preventing the urea from further entering the exhaust system post the finishing time point and thereby avoid the excessive urea being sprayed into the exhaust system. The remaining urea is reserved within the main pipeline 7.

As illustrated by the second square wave in Fig. 4, the metering pump or the metering valve 5 continues to allow the aqueous urea into the main pipeline 7 at the starting time point; at the same time the control valve 91 is shifted to the open position to switch on the connection from the main pipeline 7 to the spray nozzle 6; the left-over urea in the main pipeline 7 from the last square wave is provided into the spray nozzle 6 together with the compressed air and further enters the exhaust system. This process makes up the shortage of urea due to the inevitable late supply at the beginning of the second square wave; the control valve 91 is shifted to the close position at the finishing time point under the control of the electronic control unit 1 to avoid excessive urea being sprayed into the exhaust system.

As illustrated by the third square wave in Fig. 4, which indicates an occasion where the operating condition of the internal combustion engine is subjected to a sudden change which leads to a decreasing in the target supplied amount of urea, and the target supplied amount of urea calculated by the electronic control unit 1 is below the pre-set threshold, that is evidently fewer than the target amount of urea compared against the previous two square waves; under such circumstance, the control valve 91 is shifted to the open position, leading the left-over urea in the main pipeline 7 from the last square wave to getting into the spray nozzle 6 and further entering the exhaust system; temporary excess of actual supplied amount of urea entering the exhaust system may occur within a short period of time in the case when the amount of the left-over urea from the last square wave may be more than the target amount of urea at present square wave; the control valve 91 is shifted to the close position at the finishing time point under the control of the electronic control unit 1 to avoid excessive urea being sprayed into the exhaust system.

As can be seen from the above, the provision of urea is controlled in such a manner that urea will not enter the exhaust system at a time later than the finishing time point, with a small amount of shortage of urea supply at the starting time point and a possible small amount of over-dosing in the event of a sudden change to the operating condition. By comparison with Fig. 13, it can be seen that the introduction of control valve 91 to adjust and control the actual supplied amount of urea will contribute to the reduction on urea overdosing, favourable for stricter emission standards at a relatively lower cost. Possible solution for the excess issue under sudden change to the operating condition will be described in the following Example 3.

### Example 2

As shown in Fig. 5 is the structure of the present device for adjusting and controlling the actual supplied amount of urea entering an exhaust system. The urea control device 9 further comprises a bypass channel 92 and a bypass control valve 93. The bypass channel 92 is connected to the main pipeline 7 with the connecting point located between the urea pipeline 8 and the spray nozzle 6. The bypass control valve 93 is installed to the bypass channel 92 and communicates with the electronic control unit 1, which shifts the bypass control valve 93 between an open position and a close position. With the bypass control valve 93 in its close position, the urea and the compressed air mix together in the main pipeline 7 to flow through the spray nozzle 6 and into the exhaust system; in the otherwise open position, the remained urea mixed with the compressed air in the main pipeline 7 is discharged with the compressed air through the bypass channel 92, due to the lower pressure in the bypass channel 92 than the exhaust back pressure at the spray nozzle 6, avoiding excessive urea to enter the exhaust system with the compressed air.

In a further improvement for the prevention of excessive urea emission, the piping structure is further reconstructed. As shown by Fig. 6, the bypass channel 92 is connected to the urea storage device 3 so that the remained urea in the main pipeline 7 will recycle to the urea storage device 3 with the compressed air for later use.

The flowchart of the present device is explained in further details with reference to Fig. 7. The electronic control unit 1 collects the performance parameters of the exhaust system and the internal combustion engine, makes calculation of the target supplied amount of urea in the exhaust system and further the determination of the starting and finishing time points.

As illustrated by the first square wave in Fig. 7, with the bypass control valve 93 in its close position, the metering pump or the metering valve 5 allows the aqueous urea into the main pipeline 7 at the starting time point, the mixture of urea and compressed air is provided into the spray nozzle 6 and further into the exhaust system; certain lag out is bound to arise between the actual time point at which the urea enters the exhaust system and the starting time point, due to the time required for the movement of urea and the process for mixing; the bypass control valve 93 is shifted to the open position at the finishing time point under the control of the electronic control unit 1, causing the compressed air to purge the remained urea in the main pipeline 7 into the bypass channel 92 for recovery as a result of the exhaust back pressure at the spray nozzle 6 being higher than the pressure in the bypass channel 92. The urea is thus prevented from further entering the exhaust system post the end time point and thereby avoid the excessive urea being sprayed into the exhaust system.

As illustrated by the second square wave in Fig. 7, the metering pump or the metering valve 5 continues to allow the aqueous urea into the main pipeline 7 at the starting time point; at the same time the bypass control valve 93 is shifted to the close position; since the remained urea in the main pipeline 7 has been recovered, the lag out of urea supply at the starting time point will occur as it does in the conventional urea supply operation; the bypass control valve 93 is shifted to the open position at the finishing time point under the control of the electronic control unit 1, causing the compressed air to purge the remained urea in the main pipeline 7 into the bypass channel 92 for recovery.

As illustrated by the third square wave in Fig. 7, which indicates an occasion where the operating condition of the internal combustion engine is subjected to a sudden change which leads to a decreasing in the target supplied amount of urea, as the amount of left-over urea in the main pipeline 7 remain to be the same as the amount at the finishing time point of the last square wave, it will not cause the excess of actual supplied amount of urea as that in Example 1 to switch off the bypass control valve 93 at the starting time point under the instant operation condition, while the shortage of urea supply will duplicate as in the last two square waves; the bypass control valve 93 is shifted to the open position at the finishing time point under the control of the electronic control unit 1, causing the compressed air to purge the remained urea in the main pipeline 7 into the bypass channel 92 for recovery.

As can be seen from the above, the provision of urea is controlled in such a manner that urea will not enter the exhaust system at a time later than the finishing time point, with a small amount of shortage of urea supply at the starting time point. By comparison with Fig. 13, it can be seen that the introduction of control valve 91 to adjust and control the actual supplied amount of urea will contribute to the reduction on urea overdosing, favourable for stricter emission standards at a relatively lower cost. Although the shortage of the actual supplied amount of urea may be more severe than Example 1, improvement can be observed in terms of the handling of the actual urea supply excess. A further preferred implementation is provided in the following Example 3 based on the combination of the previous Examples 1 and 2.

### Example 3

As shown in Fig. 8 is the structure of the present device for adjusting and controlling the actual supplied amount of urea entering an exhaust system. The urea control device 9 further comprises a control valve 91, a bypass channel 92 and a bypass control valve 93. The control valve 91 is installed to the main pipeline 7, more specifically, for example installed to the section between the urea pipeline 8 and the spray nozzle 6. The bypass channel 92 is connected to the main pipeline 7 with the connecting point located between the urea pipeline 8 and the spray nozzle 6. The bypass control valve 93 is installed to the bypass channel 92. Both the control valve 91 and the bypass control valve 93 communicate with the electronic control unit 1, which shifts the control valve 91 and the bypass control valve 93 between their respective open positions and close positions.

The flowchart of the present device is explained in further details with reference to Fig. 9. The electronic control unit 1 collects the performance parameters of the exhaust system and the internal combustion engine, makes calculation of the target supplied amount of urea in the exhaust system and further the determination of the starting and finishing time points.

As illustrated by the first square wave in Fig. 9, with the bypass control valve 93 in its close position, the metering pump or the metering valve 5 allows the aqueous urea into the main pipeline 7 at the starting time point, the mixture of urea and compressed air is provided into the spray nozzle 6 and further into the exhaust system; certain lag out is bound to arise between the actual time point at which the urea enters the exhaust system and the starting time point; the control valve 91 is shifted to the close position at the finishing time point under the control of the electronic control unit 1, causing the connection of the main pipeline 7 with the spray nozzle 6 to switch off, rendering the flow rate of the compressed air at the spray nozzle 6 to nil; under such circumstance, the urea is prevented from entering the spray nozzle 6 together with the compressed air, thus preventing the urea from further entering the exhaust system post the finishing time point and thereby avoid the excessive urea being sprayed into the exhaust system. With the bypass control valve 93 in its close position, the remaining urea is reserved within the main pipeline 7.

As illustrated by the second square wave in Fig. 9, with the bypass control valve 93 in its close position, the metering pump or the metering valve 5 allows the aqueous urea into the main pipeline 7 at the starting time point; at the same time the control valve 91 is shifted to the open position to switch on the connection of the main pipeline 7 with the spray nozzle 6; the left-over urea in the main pipeline 7 from the last square wave is provided into the spray nozzle 6 together with the compressed air and further enters the exhaust system. This process makes up the shortage of urea due to the inevitable late supply at the beginning of the second square wave; the control valve 91 is shifted to the close position at the finishing time point under the control of the electronic control unit 1 to avoid excessive urea being sprayed into the exhaust system.

As illustrated by the third square wave in Fig. 9, in which the operating condition of the internal combustion engine is subjected to a sudden change which leads to a decreasing in the target supplied amount of urea, both the control valve 91 and the bypass control valve 93 are shifted to the open position at the starting time point; the left-over urea in the main pipeline 7 from the last square wave is discharged through the bypass channel 92 for recovery under the exhaust back pressure at the spray nozzle 6; the bypass control valve 93 is then shifted to the close position after the brief recovery, causing the aqueous urea given by the urea storage device 3 that mixes with the compressed air to enter the spray nozzle 6; the over dosing of urea into the exhaust system issue due to the sudden change in the operation condition in Example 1 is thus settled despite a certain amount of lag out; the control valve 91 is shifted to the close position at the finishing time point under the control of the electronic control unit 1 to avoid excessive urea being sprayed into the exhaust system.

As can be seen from the above, the provision of urea is controlled in such a manner that urea will not enter the exhaust system at a time later than the finishing time point, with a small amount of shortage of urea supply at the starting time point yet significant improvement is observed compared to Example 2.

### Example 4

Significant improvements have been demonstrated in the controlling of the actual supplied amount of urea in Examples 1-3. However, the compressed air to be given to the spray nozzle 6 will be cut off, which give rises to the deposition of urea within the spray nozzle 6 and further the condensation of urea under the combustion temperature of exhaust system and finally causing the spray nozzle 6 to clog. A more preferred Example 4 is provided herewith addressing the above issue for further adapting to industrial production and application.

As shown in Fig. 10 is a structure diagram for the device for adjusting and controlling the actual supplied amount of urea entering an exhaust system. The urea control device 9 comprises a three-way valve 94 and an branch airway 95. The three-way valve 94 is installed to the section of the main pipeline 7 between the compressed air control device 4 and the through hole. The inlet of the three-way valve 94 is connected to the compressed air control device 4 while the first outlet thereof is connected to the main pipeline 7 and the second outlet thereof is connected to the branch airway 95. The other end of the branch airway 95 is connected to the main pipeline 7 with the connecting point located between he urea pipeline 8 and the spray nozzle 6. The three-way valve 94 communicates with the electronic control unit 1, which switches the three-way valve 94 among its positions. When the compressed air control device 4 is connected to the main pipeline 7, the compressed air is provided by the compressed air supply device 2 into the main pipeline 7 to mix with the urea, which is thereby sprayed into the exhaust system. When the compressed air control device 4 is connected to the branch airway 95, the compressed air is provided by the compressed air supply device 2 into the branch airway 95 and further enters the spray nozzle 6 directly.

The flowchart of the present device is explained in further details with reference to Fig. 11. The electronic control unit 1 collects the performance parameters of the exhaust system and the internal combustion engine, makes calculation of the target supplied amount of urea in the exhaust system and further the determination of the starting and finishing time points.

As illustrated by the first square wave in Fig. 11, the three-way valve 94 is controlled by the electronic control unit 1 in such a way so that the compressed air control device 4 is connected to the main pipeline 7, the metering pump or the metering valve 5 allows the aqueous urea into the main pipeline 7 at the starting time point, the mixture of urea and compressed air is provided into the spray nozzle 6 and further into the exhaust system; certain lag out is bound to arise between the actual time point at which the urea enters the exhaust system and the starting tine point; the three-way valve 94 is controlled by the electronic control unit 1 at the finishing time point so that the compressed air control device 4 is connected to the branch airway 95, the compressed air is given directly into the spray nozzle 6 bypassing the main pipeline 7; the compressed air alone instead of a mixture with the urea is sprayed into the exhaust system through the spray nozzle 6, so that an excessive amount of urea is prevented from being injected into the exhaust system while the spray nozzle 6 is also prevented from clogging through constant purging; the metering pump or the metering valve 5 has been held from feeding more urea, with no left-over urea mixed with the compressed air in the main pipeline 7, which will not deposit and enter the spray nozzle 6 in the absence of pressure difference to cause over supply of urea; the remaining urea is reserved within the main pipeline 7.

As illustrated by the second square wave in Fig. 11, the metering pump or the metering valve 5 allows the aqueous urea into the main pipeline 7 at the starting time point; at the same time the three-way valve 94 is controlled by the electronic control unit 1 so that the compressed air control device 4 is connected to the main pipeline 7; the left-over urea in the main pipeline 7 from the last square wave is provided into the spray nozzle 6 together with the compressed air and further enters the exhaust system. This process makes up the shortage of urea due to the inevitable late supply at the beginning of the second square wave; the three-way valve 94 is controlled by the electronic control unit 1 at the finishing time point so that the compressed air control device 4 is connected to the branch airway 95, the compressed air is given directly into the spray nozzle 6 bypassing the main pipeline 7, avoiding the excessive urea being sprayed into the exhaust system.

As illustrated by the third square wave in Fig. 11, in which the operating condition of the internal combustion engine is subjected to a sudden change which leads to a decreasing in the target supplied amount of urea, at the starting time point the three-way valve 94 is controlled by the electronic control unit 1 to switch at certain frequency back and forth between connecting the compressed air control device 4 to the main pipeline 7 and to the branch airway 95,so that the compressed air is provided into the main pipeline 7 intermittently, avoiding too much left-over of urea from the last square wave to bring about the over supply of urea into the exhaust system as is the case in Example 1; at the finishing time point the three-way valve 94 is controlled by the electronic control unit 1 so that the compressed air control device 4 is connected to the branch airway 95, the compressed air is given directly into the spray nozzle 6 bypassing the main pipeline 7, avoiding the excessive urea being sprayed into the exhaust system.

As can be seen from the above, the provision of urea is controlled in such a manner that urea will not enter the exhaust system at a time later than the finishing time point, with a small amount of shortage of urea supply at the starting time point only in the first round of operation. Compared with Examples 1-3 as well as the prior arts, provided in the present invention is the introduction of an branch airway by the main pipeline 7, a three-way valve to shift and control the amount of urea supplied by the spray nozzle 6, achieving to adjust and control the actual supplied amount of urea to overcome the over supply issue while preventing the spray nozzle 6 from clogging up. Improvement has been made in the present invention at a lower cost for the existing exhaust system to conform to stricter emission standards.

The scope of the present invention is not limited to the four examples as described above. All the variations based on the inventive concept of the present invention within the reasonable prediction of those skilled in the art shall be incorporated into the scope of the present invention. The disclosure of the present invention also include any combination of any of the four examples described above. For example, the bypass channel 92 and the bypass control valve 93 of Example 2 may be introduced into Example 3, so that the left-over urea in the main pipeline 7 in Example 4 may be further recovered by employing the adjusting and controlling method as in Example 3 with the use of the bypass channel 92 and the bypass control valve 93.

With reference to Fig. 12, provided is yet another embodiment of implementation of the present invention, in which the three-way valve 94 is substituted with a three-way pipeline free of the control by any controlling valve. The compressed air is provided into both the main pipeline 7 and the branch airway 95 from the compressed air control device 4. The control valve 91 is installed to the section of the main pipeline 7 between the connecting points respectively connected to the branch airway 95 and the urea pipeline 8. The control valve 91 communicates with the electronic control unit 1, which shifts the control valve 91 between an open position and a close position to allow for or prevent the compressed air downstream movement within the main pipeline 7. To avoid the accumulation of the urea solution at the connecting point of the main pipeline 7 and the branch airway 95, the compressed air is continuously provided through the branch airway 95.

With the control valve 91 in the open position, the compressed air enters both the main pipeline 7 and the branch airway 95, where a proportion of the compressed air mixes with the urea in the main pipeline 7 before entering the spray nozzle 6 while another proportion enters the spray nozzle 6 by way of the branch airway 95, the urea is sprayed into the exhaust system by spray nozzle 6. When the control valve 91 is switched to the close position, the compressed no longer enters the main pipeline 7 but still enters the branch airway 95 and further into the spray nozzle 6. As a result of the constant flow of the compressed air in the branch airway 95, the accumulation of the urea solution at the connecting point of the branch airway 95 and the main pipeline 7 is purged into the exhaust system by the compressed air flowing out of the branch airway 95.

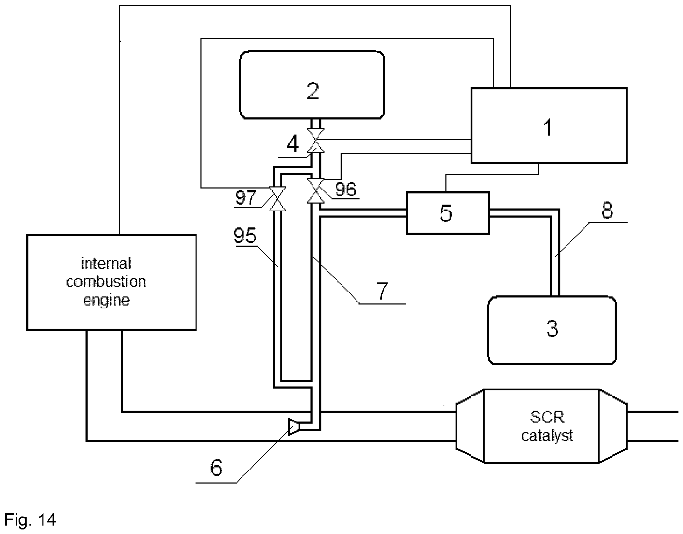

With reference to Fig. 14, provided is yet another embodiment of implementation of the present invention, in which the three-way valve 94 is substituted with a one-way valve 96 and a one-way valve 97. The one-way valve 96 is installed to the main pipeline 7 with the one-way valve 97 to the branch airway 95. Both the one-way valve 96 and the one-way valve 97 communicate with the electronic control unit 1, which shifts the one-way valve 96 and the one-way valve 97 between their open positions and close positions to allow for or prevent the flowing of compressed air into the main pipeline 7 or the branch airway 95. The employment of a pair of mutually exclusive valves in the present embodiment to replace the three-way valve 94 improves the flexibility of the system by the independent controlling of the valves.

As shown in Fig. 14, with the compressed air control device 4 in the open position, the one-way valve 96 is switched open while the one-way valve 97 close, where the compressed air enters the main pipeline 7 giving a mixture with the urea in within which enters the spray nozzle 6 that sprays the urea into the exhaust system; with the compressed air control device 4 in the close position, the one-way valve 96 is switched close while the one-way valve 97 open, where the remaining compressed air enters the spray nozzle 6 by way of the branch airway 95. The over supply of urea into the exhaust system is avoided in this way by the compressed air entering the spray nozzle 6 bypassing the main pipeline 7.

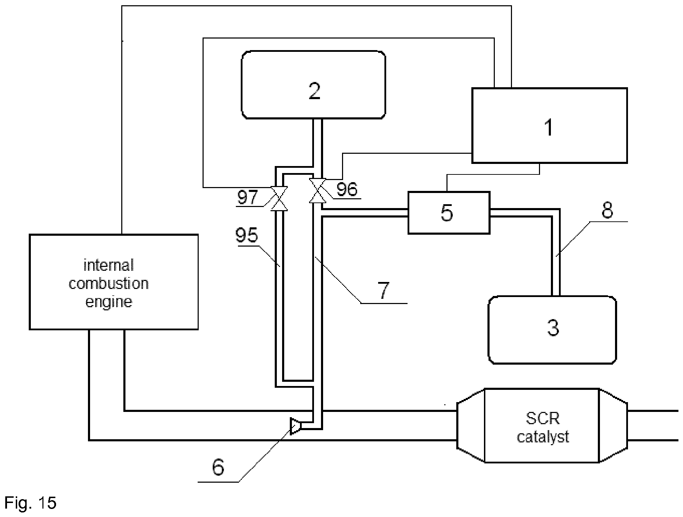

In the above embodiment, the compressed air control device 4 is an optional part for installation. The compressed air control device 4 may remain to be turned on during operation. Alternatively, the compressed air control device 4 may be removed, as shown in Fig. 15 the structure of device. When the one-way valve 96 is switched open and the one-way valve 97 close, the compressed air enters the main pipeline 7 giving a mixture with the urea in within which enters the spray nozzle 6 that sprays the urea into the exhaust system. When the one-way valve 96 is switched close while the one-way valve 97 open, the compressed air enters the spray nozzle 6 by way of the branch airway 95. The over supply of urea into the exhaust system is avoided this way by the compressed air entering the spray nozzle 6 bypassing the main pipeline 7. Additionally, the accumulation of the urea solution at the connecting point of the branch airway 95 and the main pipeline 7 is purged into the exhaust system by the compressed air flowing out of the branch airway 95, as a result of the constant flow of the compressed air in the branch airway 95.

The scope of the invention shall not be limited to the embodiments as described above. Those variations and merits that are readily predictable to those skilled in the art shall also be incorporated into scope the present invention, as defined by the set of claims attached therewith.

## Claims

1. A device for adjusting and controlling the actual supplied amount of urea entering an exhaust system, comprising an electronic control unit(1), a compressed air supply device(2), a urea storage device(3), a compressed air control device(4), a metering pump or a metering valve(5), a spray nozzle(6), a main pipeline(7) and a urea pipeline(8);
the said electronic control unit(1) is connected with the internal combustion engine of the exhaust system, which is used for collecting the performance parameters of the internal combustion engine and calculating the target supplied amount of urea in the exhaust system and further for determining the starting and finishing of the time points; the said urea storage device(3) is provided for storing the urea; the said compressed air supply device (2) is connected to the main pipeline(7); the said compressed air control device(4) is installed at the point where the compressed air supply device(2) is connected to the main pipeline(7), and the said compressed air control device(4) communicates with the electronic control unit(1) to control the flow rate of the compressed air sparyed into the main pipeline(7); a through hole is formed in the middle section of the main pipeline(7); the two ends of the urea pipeline(8) is connected to the said urea storage device(3) and the through hole respectively; the said metering pump or the metering valve(5) is installed to the urea pipeline(8) and communicates with the electronic control unit(1), which controls the volume of the urea flowed into the main pipeline(7) from the urea storage device(3); the outlet of the main pipeline(7) extends into the exhaust system; the said spray nozzle(6) is installed at the said outlet of the main pipeline(7) so that the urea is introduced into the exhaust system by spray; the urea is mixed with the compressed air in the main pipeline(7); wherein the said device further comprises an urea control device(9), which is installed to the main pipeline(7), and communicates with the electronic control unit(1);
the said urea control device(9) is provided, when the urea is controlled to enter the exhaust system, the compressed air is provided into the main pipeline(7), so that the urea in the main pipeline(7) will enter into the spray nozzle(6) by the compressed air and further be injected into the exhaust system in the spay-like form;
when the urea is controlled to be held from entering the exhaust system, the compressed air is provided into the spray nozzle(6) without passing through the main pipeline(7), causing the urea in the main pipeline(7) to be stopped entering the spray nozzle(6) and stopped entering the exhaust system.

2. The device for adjusting and controlling the actual supplied amount of urea entering an exhaust system according to claim 1, wherein the said urea control device(9) comprises a three-way valve(94) and an branch airway(95); the said three-way valve(94) is installed to the section of the main pipeline(7) between the compressed air control device(4) and the through hole; the inlet of the three-way valve(94) is connected to the compressed air control device(4) while the first outlet thereof is connected to the main pipeline(7) and the second outlet thereof is connected to an end of the said branch airway(95); the other end of the branch airway(95) is connected to the main pipeline(7), the connecting points are located between the urea pipeline(8) and the spray nozzle(6); the three-way valve(94) communicates with the electronic control unit(1);
when the urea is controlled to enter the exhaust system, the three-way valve(94) connects the compressed air supply device(2) to the main pipeline(7), allowing the compressed air to be provided into the main pipeline(7);
when the urea is controlled to be stopped entering the exhaust system, the three-way valve(94) connects the compressed air supply device(2) to the branch airway(95), allowing the compressed air to enter the spray nozzle(6) through the branch airway(95).

3. The device for adjusting and controlling the actual supplied amount of urea entering an exhaust system according to claim 1, wherein,
the said urea control device(9) is provided, when the urea is controlled to be stopped entering the exhaust system, the compressed air is changed to be prevented from entering the spray nozzle(6), so that the urea will not be entered into the spray nozzle(6) and be stopped entering into the exhaust system.

4. The device for adjusting and controlling the actual supplied amount of urea entering an exhaust system according to claim 3, wherein the said urea control device(9) comprises a control valve(91); the said control valve(91) is installed to the main pipeline(7) between the urea pipeline(8) and the spray nozzle(6); the control valve(91) communicates with the electronic control unit(1), which switches on and off the connection between the main pipeline(7) and the spray nozzle(6) by switching the control valve(91) to an open position or to a close position.

5. The device for adjusting and controlling the actual supplied amount of urea entering an exhaust system according to claim 3 or 4, wherein the said urea control device(9) further comprises a bypass channel(92) and a bypass control valve(93); the said bypass channel(92) is connected to the main pipeline(7) with the connecting point located between the urea pipeline(8) and the spray nozzle(6); the said bypass control valve(93) is installed to the bypass channel(92) and communicates with the electronic control unit(1), the electronic control unit (1) switches the bypass control valve(93) to an open position for allowing the compressed air to enter the external atmosphere through the bypass channel(92) and switches the bypass control valve (93) to a close position for allowing the compressed air to enter the spray nozzle(6).

6. The device for adjusting and controlling the actual supplied amount of urea entering an exhaust system according to claim 5, wherein the connecting point of one end of the bypass channel(92) connected to the main pipeline(7) is located the upstream of the control valve(91); by switching the control valve(91) to the close position and the bypass control valve(93) to the open position, the compressed air is allowed to enter the bypass channel(92); whereas by switching the control valve(91) to the open position and the bypass control valve(93) to the close position, the compressed air is allowed to enter the spray nozzle(6).

7. The device for adjusting and controlling the actual supplied amount of urea entering an exhaust system according to claim 5, wherein the other end of the bypass channel(92) is further connected to the urea storage device(3); by switching the bypass control valve(93) to the open position, the compressed air is allowed to enter the urea storage device(3) through the bypass channel(92).

8. A method provided for adjusting and controlling the actual supplied amount of urea entering an exhaust system, wherein the said method comprises:
Step 1: collecting the performance parameters of the exhaust system and the internal combustion engine, and calculating the target supplied amount of urea entered into the exhaust system and further determining the starting and finishing time point;
Step 2: the compressed air supply device(2) providing the compressed air into the main pipeline(7), while the urea storage device(3) providing the aqueous urea into the main pipeline(7) through the urea pipeline(8), so that the urea and the compressed air are mixed in the main pipeline(7); both the provided volume of the urea and the flow rate of the compressed air are determined according to the target supplied amount of urea;
Step 3: by referring to the starting time point, when the urea is controlled to enter the exhaust system, the compressed air is provided into the main pipeline(7) so that the urea in the main pipeline(7) is fed into the spray nozzle(6) by the compressed air and further provided into the exhaust system in the spray-like form; by referring to the finishing time point, when the urea is controlled to be stopped entering the exhaust system, the compressed air is provided into the spray nozzle(6) without passing through the main pipeline(7), so that the urea in the main pipeline(7) is stopped to be fed into the spray nozzle(6) and further stopped entering into the exhaust system.

9. The method provided for adjusting and controlling the actual supplied amount of urea entering an exhaust system according to claim 8, wherein the said Step 3 further comprises: when the urea is controlled to enter the exhaust system, the three-way valve(94) connects the compressed air supply device(2) to the main pipeline(7), allowing the compressed air to enter the main pipeline(7); when the urea is controlled to be stopped entering the exhaust system, the three-way valve(94) connects the compressed air supply device(2) to the branch airway(95), allowing the compressed air to enter the spray nozzle(6) through the branch airway(95).

10. The method provided for adjusting and controlling the actual supplied amount of urea entering an exhaust system according to claim 9, wherein when the target supplied amount of urea is below the pre-set threshold, the three-way valve (94) is controlled to connect to the main pipeline(7) intermittently so that the compressed air is provided into the main pipeline(7) intermittently, causing the remained urea in the main pipeline(7) to enter the spray nozzle(6).

11. The method provided for adjusting and controlling the actual supplied amount of urea entering an exhaust system according to claim 8, wherein the said Step 3 is replaced by following:
when the urea is controlled to enter the exhaust system, the compressed air is provided into the main pipeline(7) by referring to the starting time point, so that the urea in the main pipeline(7) is fed into the spray nozzle(6) by the compressed air and further provided into the exhaust system in the spray-like form; when the urea is controlled to be stopped injecting into the exhaust system, the compressed air is prevented from entering the spray nozzle(6), so that the urea is stopped being fed into the spray nozzle(6) and further into the exhaust system.

12. The method provided for adjusting and controlling the actual supplied amount of urea entering an exhaust system according to claim 11, wherein the said Step 3 comprises installing the control valve(91) to the main pipeline(7); the control valve(91) is shifted between an open position and a close position to switch on and off the connection between the main pipeline(7) and the spray nozzle(6).

13. The method provided for adjusting and controlling the actual supplied amount of urea entering an exhaust system according to claim 11 or 12, wherein the said Step 3 further comprises installing a bypass channel(92) and a bypass control valve(93) outside the pipeline; when the bypass control valve(93) is shifted to the open position, the compressed air is allowed to enter the external atmosphere through the bypass channel(92), whereas when the bypass control valve(93) is shifted to the close position, the compressed air is allowed to enter the spray nozzle(6).

14. The method provided for adjusting and controlling the actual supplied amount of urea entering an exhaust system according to claim 13, wherein the said Step 3 further comprises that the connecting point of the bypass channel(92) with the main pipeline(7) is located at the upstream of the control valve(91); by switching the control valve(91) to the close position and the bypass control valve(93) to the open position, the compressed air is allowed to enter the bypass channel(92); whereas by switching the control valve(91) to the open position and the bypass control valve(93) to the close position, the compressed air is allowed to enter the spray nozzle(6).

15. The method provided for adjusting and controlling the actual supplied amount of urea entering an exhaust system according to claim 13, wherein the said Step 3 further comprises that the other end of the bypass channel(92) is further connected to the urea storage device(3); by switching the bypass control valve(93) to the open position, the compressed air is allowed to be fed into the urea storage device(3) through the bypass channel(92).
